# EUROPEAN PATENT SPECIFICATION

(11) **EP 2 192 033 B1**
(45) Date of publication and mention of the grant of the patent: **23.03.2016**
(21) Application number: 08791693.8
(22) Date of filing: 25.07.2008
(51) Int. Cl.: B62J 17/04, B62J 99/00

(54) **WINDSHIELD DEVICE FOR STRADDLE RIDING TYPE VEHICLE**
WINDSCHUTZSCHEIBENVORRICHTUNG FÜR FAHRZEUGE MIT SATTEL
DISPOSITIF DE PARE-BRISE POUR UN VÉHICULE DE TYPE À CONDUITE À CALIFOURCHON

(30) Priority: 28.09.2007 JP 2007253442
(43) Date of publication of application: 02.06.2010
(73) Proprietor: Honda Motor Co., Ltd., Minato-ku Tokyo 107-8556 (JP)
(72) Inventor: KURAKAWA, Yukinori, Wako-shi Saitama 351-0193 (JP); MATSUO, Hisashi, Wako-shi Saitama 351-0193 (JP); NAMIKI, Yoshihiro, Saitama 351-0193 (JP)
(74) Representative: Ilgart, Jean-Christophe
(86) International application number: PCT/JP2008/063449
(87) International publication number: WO 2009/041155

(56) References cited:
- EP-A1- 1 905 679
- EP-A2- 1 621 454
- JP-A- 2002 104 267
- JP-A- 2002 205 674
- JP-A- 2004 098 858
- JP-A- 2006 036 062
- JP-A- 2007 062 616
- JP-A- 2007 176 297

## Description

### Technical Field

The present invention relates to a windshield device for a saddle-type vehicle such as a motorcycle or the like.

The present application claims priority to Japanese Patent Application No. 2007-253442, the entire contents of which are hereby incorporated by reference.

### Background Art

Conventionally, a windshield device for a saddle-type vehicle has been proposed to include a concavely-curved air duct which is raised at the rear portion so as to guide a traveling airflow in an upward direction from the front side of the vehicle. In the windshield device, the traveling airflow is vented off upwardly through the air duct, so that a screening effect for an occupant at a position rear of the windscreen can be enhanced while suppressing the height of the windscreen device. Examples are described in Japanese Unexamined Patent Application, First Publication 2006-036062, or EP-A-1621454.

### Disclosure of Invention

### Technical Problem

The wall portion of the air duct at the outer side of the vehicle of the related art is concavely curved along the air duct. However, it is necessary to ensure a degree of freedom in design for the appearance of the windshield device, and, in addition, the saddle-type vehicle, for example by forming a rounded appearance of a streamlined shape that is convex toward the outer side of the vehicle.

An object of the invention is to increase the degree of freedom in design for the appearance of the windshield device while enhancing the screening effect for a occupant of the windshield device for a saddle-type vehicle including a curved wall portion which is concavely curved and raised at the rear portion so as to guide a traveling airflow from the front side of the vehicle to an upward direction.

### Technical Solution

To overcome the above-mentioned problem, the invention employs the following means.

That is, a first aspect of the invention is directed to a windshield device for a saddle-type vehicle including: a wall portion which is concavely curved and raised at a rear portion so as to guide a traveling airflow from the front side of the vehicle to an upward direction; a cowling portion which is formed in a convexly curved shape toward an outer side of the vehicle so as to cover the curved wall portion from the outside of the vehicle with a gap; and left and right side wall portions assembled to left and right sides of the curved wall portion towards the cowling portion; wherein an air channel is formed by the curved wall portion, the cowling portion and left-right side wall portions, the air channel guiding the traveling airflow from the front direction of the vehicle toward an upward direction, so that the traveling airflow moves upper.

With the windshield device for the saddle-type vehicle according to the first aspect, by forming within the windshield device the air channel that guides the traveling airflow that came in from the front side of the vehicle toward the upward direction, the screening effect for a occupant positioned rear of the windscreen device can be enhanced while suppressing the height of the windscreen device.

In addition, since the concavely curved wall portion is covered by the convexly curved cowling portion at the outside of the vehicle, it is possible to improve the appearance of the windshield device by preventing the concavely curved wall portion from being exposed. Consequently, it can enhance the degree of freedom in design for the appearance of the saddle-type vehicle, for example, by forming a rounded appearance of a streamlined shape that is convex toward the outer side of the vehicle.

With the windshield device for the saddle-type vehicle according to the first aspect, a rectifying plate which is curved along the curved wall may be provided in the inside of the air channel.

In this instance, since the traveling airflow in the air channel is easily rectified by the rectifying plate, it is possible to enhance the screening effect by easily venting the traveling airflow in an upward direction.

A second aspect of the invention is directed to a windshield device for a saddle-type vehicle including: an air duct which is concavely curved and raised at a rear portion so as to guide the traveling airflow from the front side of the vehicle to the upward direction; a curved wall portion which forms a wall portion of the air duct on an outside of the vehicle and is curved along the air duct; a cowling portion which is formed in a convexly curved shape toward the outer side of the vehicle so as to cover the curved wall portion from the outside of the vehicle, with a gap being interposed between the curved wall portion and the cowling portion; and left and right side wall portions assembled to left and right sides of the curved wall portion towards the cowling portion; wherein an air channel is formed by the curved wall portion, the cowling portion and left-right side wall portions, the air channel guiding the traveling airflow from the front direction of the vehicle toward an upward direction, so that the traveling airflow moves upper.

With the windshield device for the saddle-type vehicle according to the second aspect, since the air channel which guides the traveling airflow in the upward direction from the front side of the vehicle is separately formed from the air duct, a screening effect for a occupant positioned rear of the windscreen device can be enhanced while suppressing the height of the windscreen device.

In addition, since the concavely curved wall portion is covered by the convexly curved cowling portion at the outside of the vehicle, it is possible to improve the appearance of the windshield device by preventing the concavely curved wall portion from being exposed. Consequently, it can enhance the degree of freedom in design for the appearance of the saddle-type vehicle, for example, by forming a rounded appearance of a streamlined shape that is convex toward the outer side of the vehicle.

With the windshield device for the saddle-type vehicle according to the first or second aspect, left and right side portions of the cowling portion may be curved in the rearward direction, with both outer sides being further curved in the rearward direction.

In this instance, since the traveling airflow flowing on the surface of the cowling portion flows easily to outer sides in the left-right direction, it is possible to effectively suppress resistance to the traveling airflow.

The invention is defined by the claims. With the windshield device for the saddle-type vehicle according to claim 1, the upper portion of the curved wall portion is made of a transparent member.

The cowling portion is provided at the upper portion thereof with a concave portion formed by recessing the upper end thereof in the downward direction.

In all the cases, since the field of view over the upper portion of the windshield device is easily obtained, it is possible to improve the sense of openness of the riding position.

### Advantageous Effects

With the windshield device for the saddle-type vehicle according to the first aspect, since the air channel which guides the traveling airflow in an upward direction from the front side of the vehicle is formed in the windshield device, the screening effect for a occupant positioned rear of the windscreen device can be enhanced while suppressing the height of the windscreen device.

In addition, since the concavely curved wall portion is covered by the convexly curved cowling portion at the outside of the vehicle, it is possible to prevent the concavely curved wall portion from being exposed as the appearance of the windshield device. Consequently, it can enhance the degree of freedom in design for the appearance of the saddle-type vehicle, for example, by forming a rounded appearance of a streamlined shape that is convex toward the outer side of the vehicle.

With the windshield device for the saddle-type vehicle according to the invention, since the air channel which guides the traveling airflow in the upward direction from the front side of the vehicle is separately formed from the air duct, the screening effect for a occupant positioned rear of the windscreen device can be enhanced while suppressing the height of the windscreen device.

In addition, since the concavely curved wall portion is covered by the convexly curved cowling portion at the outside of the vehicle, it is possible to improve the appearance of the windshield device by preventing the concavely curved wall portion from being exposed. Consequently, it can enhance the degree of freedom in design for the appearance of the saddle-type vehicle, for example, by forming a rounded appearance of a streamlined shape that is convex toward the outer side of the vehicle.

### Brief Description of Drawings

FIG. 1 is a left-side view of a motorcycle according to an embodiment of the invention;
FIG. 2 is a cross-sectional view of a screen for the motorcycle at the center position of left and right directions thereof;
FIG. 3 is a perspective view of the screen;
FIG. 4 is an exploded perspective view of the screen;
FIG. 5 is a plan view of the screen; and
FIG. 6 is a planar cross-sectional view taken along a line E-E of FIG. 3.

### Explanation of Reference

1: MOTORCYCLE (SADDLE-TYPE MOTORCYCLE)
25: SCREEN (WINDSHIELD DEVICE)
26: COWLING PORTION
26A: LEFT-RIGHT SIDE PORTIONS
28: UPPER CUT PORTION (CONCAVE PORTION)
31: AIR DUCT
34a: SECOND AIR CHANNEL (AIR CHANNEL)
34D: LARGE AIR CHANNEL (AIR CHANNEL)
36: INNER CURVED WALL PORTION (CURVED WALL PORTION)
37: OUTER CURVED WALL PORTION (CURVED WALL PORTION, RECTIFYING PLATE)
39: LEFT AND RIGHT SUPPORT WALL PORTIONS (LEFT AND RIGHT SIDEWALL PORTIONS)
39D: LEFT AND RIGHT LARGE SIDEWALL PORTIONS (LEFT AND RIGHT SIDEWALL PORTIONS)
41: INNER FLAT PORTION (TRANSPARENT MEMBER)
42: OUTER FLAT PORTION (TRANSPARENT MEMBER)

### Best Mode for Carrying out the Invention

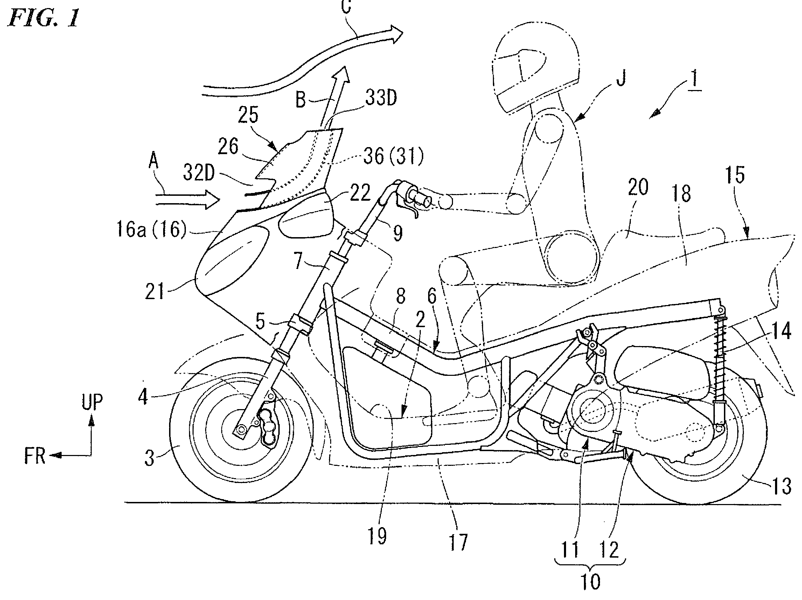

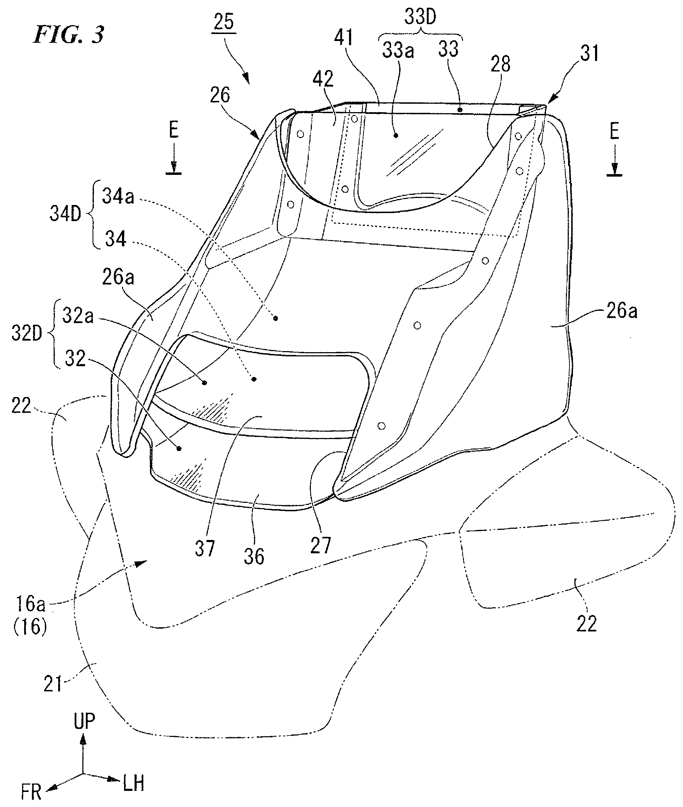

Hereinafter, an embodiment of the invention is explained in conjunction with the accompanying drawings. The directions such as a longitudinal direction, a lateral direction and the like in the explanation made hereinafter are equal to the corresponding directions in a vehicle unless otherwise described. Further, an arrow FR in FIGS. 1 to 6 indicates a forward direction of the vehicle, an arrow LH in FIGS. 3 to 6 indicates a left sideward direction of the vehicle, and an arrow UP in FIGS. 1 to 4 indicates an upward direction of the vehicle.

A motorcycle (a saddle-type vehicle) 1 shown in FIG. 1 is a scooter-type vehicle including a low floor 2. A front wheel 3 is pivotally supported on a front fork 4 of a telescopic type, and the front fork 4 is steerably and rotatably supported on a head pipe 7 mounted on the front end portion of a vehicle body frame 6 by way of a steering stem 5. The vehicle body frame 6 includes a main pipe 8 extending from the head pipe 7 in the rearward direction and then bending and extending in an upward direction. A handlebar 9 is mounted on the upper end portion of the steering stem 5.

On a rear portion of the vehicle body frame 6, a swing unit 10 is swingably and pivotally mounted about the front end side thereof. The swing unit 10 is integrally constituted of an engine 11 and a power transmission mechanism 12, and a rear wheel 13 is connected to an output shaft on a rear end side of the power transmission mechanism. A rear cushion 14 for shock absorption is arranged between a rear end portion of the swing unit 10 and a rear end portion of the vehicle body frame 6.

The vehicle body frame 6 is covered with a body cover 15 mainly made of a synthetic resin. The body cover 15 includes a front cover (a front cowling) 16 which covers a front portion of the vehicle body frame 6 in a state where a covering range extends from the front side to left and right sides of the vehicle body frame 6, an under cover 17 for covering a lower portion of the vehicle body frame 6 in a state where the under cover 17 is continuously connected to the lower end portion of the front cover 16, a rear cover 18 for covering the rear portion of the vehicle body frame 6, and a floor cover 19 for covering a portion extending from the rear portion of the front cover 16 to an upper portion of the under cover 17.

Above the upper portion of the rear cover 18, a seat 20 for occupants (a rider and a passenger riding pillion) is arranged, in which the seat 20 is operable to open or close an article storing chamber (not shown) arranged in the inside of the rear cover 18. An occupant (rider) J who sits on the front portion of the seat 20 assumes a driving posture in which the rider grips left and right grip portions of the handle 9 with his/her both hands and places his/her feet on the floor cover 19. Here, the front cover 16 is positioned in front of (at the front portion of) the occupant to reduce air flow pressure to be applied to the rider J.

The upper portion of the front cover 16 is formed as a screen 25 made of a transparent or translucent permeable resin such as polycarbonate. The occupant J can view the front of the vehicle through the screen 25, and an upper edge portion of the screen 25 (the front cover 16) has a certain height (approximately chest height) set so as not to obstruct a front field of vision of the occupant J. A portion (a cover body 16a) of the front cover 16 except for the screen 25 is made of an opaque resin such as ABS. In the drawings, reference numeral 21 indicates a headlamp provided at the front end portion of the front cover 16, and reference numeral 22 indicates wing mirrors provided at left and right sides of the front cover 16.

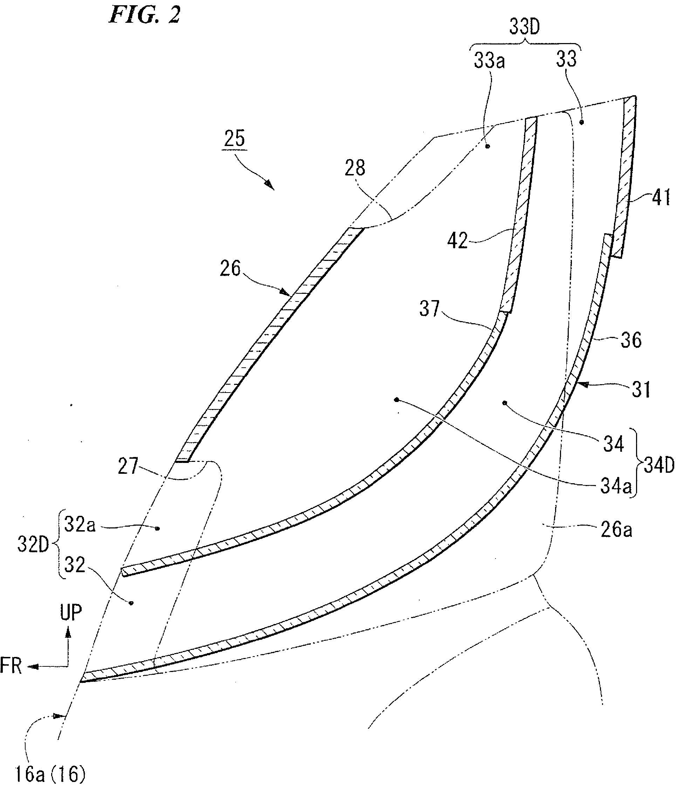

As shown in FIG. 2 to FIG. 4, the screen 25 includes a plate-like cowling portion 26 for forming an outer surface, which is raised at the rearward portion thereof, on an upper portion of the front cover 16, and an air duct 31 provided in the inside (a rear side) of the cowling portion 26 and having a predetermined gap.

The cowling portion 26 has a general shape that is raised in the rear part, and is curvedly formed in the side view thereof, in such a way that the steepness is gradually smaller at the rear side (an upper side) thereof. In other words, the cowling portion 26 is curvedly formed so as to be convex toward the obliquely upper-forward direction (an outer side of the vehicle), when seen from a side thereof.

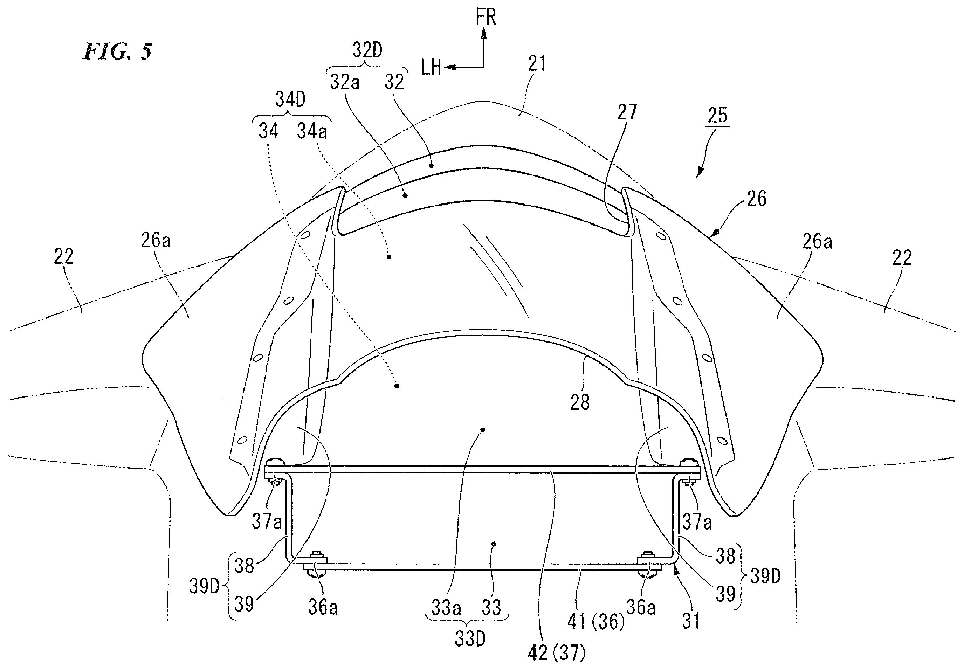

As shown in FIG. 5, the cowling portion 26 is curvedly formed, when seen at a plane, in such a way that left and right side portions 26a thereof are curved in rearward direction as it extends further to left-right sides. In other words, the cowling portion 26 is curvedly formed so as to be convex toward a forward direction, when seen from a side thereof.

Traveling airflow impacting on the outer surface of the cowling portion 26 flows obliquely along the outer surface in the upward and rearward direction and in the lateral and outward direction.

As shown in FIG. 3, the cowling portion 26 is provided such that upper and lower ends of left-right portions 26a extend to upper and lower ends of the screen 25, respectively. The lower portion of the cowling portion 26 is provided at left-right inner sides thereof with a lower cut portion 27 so as to orient an air inlet port 32 of an air duct 31 in the front direction of the vehicle. Further, the upper portion of the cowling portion 26 is provided at left-right inner sides thereof with an upper cut portion 28 so as not to obstruct the field of view of the occupant J. The lower cut portion 27 is formed in a rectangular shape, when seen from the front side, and forms a U-shaped inner edge shape which is opened in a downward direction. The upper cut portion 28 is formed in a semi-circular shape, when seen from the front side, and forms an arc-shaped upper edge shape which is convex in a downward direction.

As shown in FIG. 2 to FIG. 4, the air duct 31 is curvedly formed, when seen from the side thereof, so that it is generally raised as extending in the rearward direction and that it is further steeply raising as it extends further to the rear side (the upper side). In other words, the air duct 31 is curvedly formed so as to be convex in the obliquely downward and rearward direction (that is, to be concave when seen from an outside of the vehicle).

The air duct 31 includes the air inlet port 32 which is positioned at the front lower end of the screen 25 and is opened towards the front side of the vehicle, an air outlet 33 which is positioned at a rear upper end portion of the screen 25 and is opened towards the upper side, and an air channel 34 communicating the air inlet port 32 and the air outlet 33. The air channel 34 extends in a curved shape, when seen from a side of the air duct 31, from the air inlet port 32 to the air outlet 33, and has a rectangular cross-section which is wide in left-right direction.

The air inlet port 32 of the air duct 31 is positioned at the lower side of the lower cut portion 27 of the cowling portion 26, and is opened to be continuously formed with an inclined outer surface formed by the cowling portion 26. The air inlet port 32 is formed in the rectangular shape which is wide in left-right direction thereof, and the left-right width thereof is substantially equal to the left-right width of the lower cut portion 27. The lower edge of the air inlet port 32 is positioned at the front lower end of the screen 25, and the upper edge of the air inlet port 32 is positioned at a portion closer to the lower portion than the upper edge of the lower cut portion 27. A gap between the upper edge of the air inlet port 32 and the upper edge of the lower cut portion 27 serves as a second air inlet port 32a which can receive a traveling airflow between the cowling portion 26 and the air duct 31. Alternatively, both air introducing ducts 32 and 32a may be combined to form a large air inlet port 32D.

The air outlet 33 of the air duct 31 is opened to be continuously formed with the substantially-horizontal upper end surface (more specifically, raised slightly in the rearward direction) at the upper end position of the rear side of the screen 25. The air outlet 33 is formed in a rectangular shape which is wide in the left-right direction, and the left-right width is narrower than that of the upper end of the cowling portion 26. The air duct 31 is provided to have a narrower width in left-right direction with respect to the cowling portion 26 which is provided to span the left-right entire width of the front cover 16.

As shown in FIG. 5, the front edge of the air outlet 33 is positioned further to the rear than the upper edge of the cowling portion 26. The gap between the front edge of the air outlet 33 and the upper edge of the cowling portion 26 serves as a second air outlet port 33a which upwardly blows out the traveling airflow, the airflow which is received during the vehicle travel into between the cowling p portion 26 and the air duct 31. Alternatively, both air outlet ports 33 and 33a may be combined to form a large air outlet port 33D.

The air duct 31 extends along the curved shape, when seen at the side thereof, to have a hollow rectangular cross-section which forms the air channel 34. Hereinafter, the vehicle-inside wall of the air duct 31 and the vehicle-outside wall are respectively referred to as an inner curved wall portion 36 and an outer curved wall portion 37, and wall portions of left-right sides of the air duct 31 are referred to as left-right wall portions 38.

The left and right support wall portions 39 are assembled to left-right side edges of the outer curved wall portion 37 towards the rear surface of left-right side portions 26a of the cowling portion 26 which is positioned at the outside of the vehicle. The left and right support wall portions 39 are installed to be continuously formed with left-right side wall portions 38. If the left and right support wall portions 39 and left-right side wall portions 38 are combined to form left and right large sidewall portions 39D, the left and right large sidewall portions 39D may be assembled to left-right side edges of the inner curved wall portion 36 towards the rear surface of the cowling portion 26.

The cowling portion 26 covers the outer curved wall portion 37 and the air duct 31 from the outer side of the vehicle, in a state in which a predetermined interval is left between the cowling portion 26 and the outer curved wall portion 37 of the air duct 31. That is, the air duct 31 (and the inner curved wall portion 36 and the outer curved wall portion 37 of the air duct 31), which is concavely curved when seen from the outside of the vehicle, is covered by the convex-shaped cowling portion 26, when seen from the outside of the vehicle, from the vehicle side. Consequently, the air duct 31 (and the inner curved wall portion 36 and the outer curved wall portion 37 of the air duct 31) is not exposed from the appearance of the screen 25 (front cover 16) and the appearance of the motorcycle 1. As a result, it is possible to form a rounded appearance of a streamlined shape that is convex toward the outer side of the vehicle.

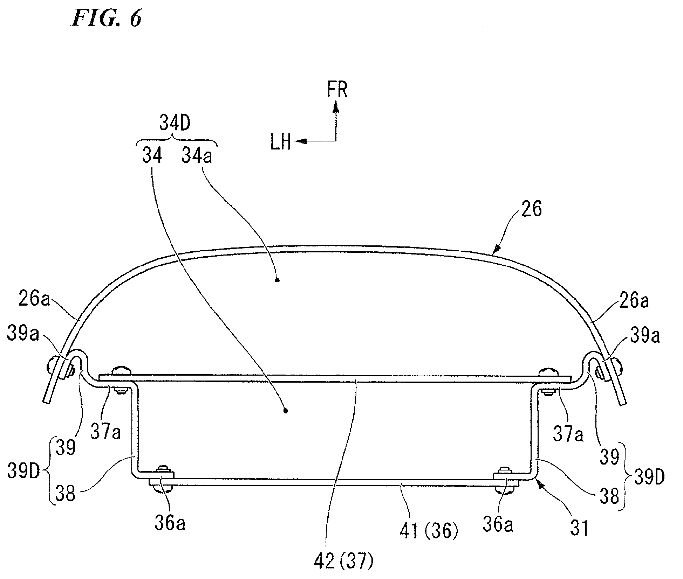

Referring to FIG. 6, the cowling portion 26 and the air duct 31 are formed in a separate body. The left and right support wall portions 39 of the air duct 31 extends towards the rear surface of the left and right inner sides rather than left-right side edges of the cowling portion 26. Left-right coupling flanges 39a connected to the front edges towards left-right outsides are integrally engaged to left-right side portions 26a of the cowling portion 26 by a plurality of screws or clips, so that the cowling portion 26 and the air duct 31 are integrally assembled.

In the inside of vehicle of the cowling portion 26, a second air channel 34a which communicates the second air inlet port 32a and the second air outlet port 33a is formed by the cowling portion 26, the outer curved wall portion 37 and the left and right support wall portions 39. If the second air channel 34a and the air channel 34 are combined to form a large air channel 34D, the screen 25 is provided with the large-sized air duct including the large air inlet port 32D, the large air outlet port 33D and the large air channel 34D. Further, the outer curved wall portion 37 operates as a rectifying plate for rectifying a flow of the traveling airflow in the large air channel 34D.

As shown in FIGS. 1 and 2, when the motorcycle 1 is driven, a portion of the traveling airflow (see an arrow A in FIG. 1) flowing horizontally from the front side of the vehicle to the rear side thereof is introduced into the large air channel 34D (each air channels 34 and 34a) in the screen 25 from the large air inlet port 32D (each air inlet ports 32 and 32a). The flow direction of the traveling airflow introduced in the screen 25 is changed upwardly along the inner curved wall portion 36 and the outer curved wall portion 37, and then is vented upwardly from the large air outlet port 33D (each air outlet port 33 and 33a) (see an arrow B in FIG. 1).

The flow of the traveling airflow which is vented from the large air outlet port 33D and approaches the occupant J over the upper portion of the screen 25 is changed to flow obliquely in the upward and rearward direction by the screen 25 (see an arrow A in FIG. 1). Consequently, it is possible to guide the whole traveling airflow facing the occupant J away from the occupant J (that is, an appropriate screening effect), while suppressing the height of the screen 25.

As shown in FIG. 2 to FIG. 6, the upper portions of the inner curved wall portion 36 and the outer curved wall portion 37 are formed in a flat shape, and the flat portions are installed separately from the air duct 31 as an inner flat portion 41 and an outer flat portion 42.

The inner flat portion 41 is substantially formed in a flat shape which is formed substantially along the left-right direction, and is formed in a rectangular shape which extends in a left-right direction when seen at a front view. Left-right side portions of the inner flat portion 41 are overlapped with the inner connecting portion 36a formed at both side portions of the upper portion of the inner curved wall portion 36 from the rearward, and then are integrally connected to each other by means of a plurality of screws or clips.

The upper portion of the inner curved wall portion 36 is provided with an inner cut portion 36b which forms an inner edge shape of a U shape, the inner cut portion being opened upwardly. The inner connecting portion 36a is installed in left-right side portions of the inner cut portion 36b. The lower edge of the inner cut portion 36b is formed in an upwardly-convex arc shape, and the lower edge of the inner flat portion 41 is overlapped with the lower edge from the rearward. The lower edge of the inner cut portion 36b and the lower edge of the inner flat portion 41 are not overlapped with each other, but may meet each other.

The outer flat portion 42 is substantially formed in a flat shape which is continuously formed in left-right side directions, and is formed in a rectangular shape which extends in a widthwise direction when seen at a front view. Left-right side portions of the outer flat portion 42 are overlapped with the outer connecting portion 37a formed at the upper portion of the left and right support wall portions 39 from forward, and then are integrally connected to each other by means of a plurality of screws or clips.

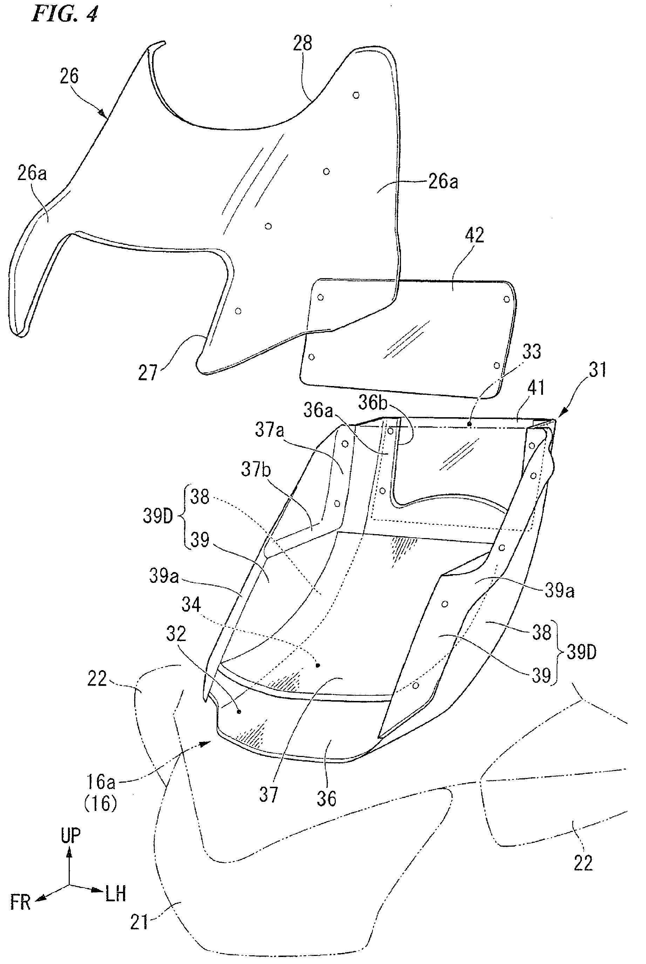

As shown in FIG. 4, the upper portion of left-right side wall portions 38 is displaced in the left and right outside through a stepped portion 37b, such that the rear portion of the stepped portion 37b serves as the outer connecting portion 37a. The upper portion of the outer curved wall portion 37 is cut at a position lower than the upper end position of the screen 25, and the lower edge of the outer flat portion 42 meets the upper end and they are connected to each other. The lower end portion of the outer flat portion 42 and the upper end portion of the outer curved wall portion 37 are overlapped with each other and are connected to each other.

Since the upper end portion of the cowling portion 26 is provided with the upper cut portion 28, the occupant J can obtain the field of view over the upper portion of the screen 25 through the inner flat portion 41 and the outer flat portion 42 only. That is, since only the inner flat portion 41 and the outer flat portion 42 are formed to be colorless and transparent or smooth, it is possible to improve the sense of openness by obtaining a clear field of view over the upper portion of the screen 25, and the degree of freedom in design can be enhanced by forming the cowling portion 26 and the air duct 31 translucently or subjecting them to an appropriate graining process.

With the above description, the screen 25 of the motorcycle 1 according to the embodiment includes the concavely curved air duct 31 which is raised in the rearward direction so as to guide the traveling airflow from the front side of the vehicle to the upward side thereof, the outer curved wall portion 37 which forms a wall portion of the air duct 31 on an outside of the vehicle and is curved along the air duct 31, the cowling portion 26 for covering the curved wall portion 37 from the outside of the vehicle, with the gap being interposed between the curved wall portion and the cowling portion, and the left and right support wall portions 39 assembled to left-right sides of the outer curved wall portion 37 towards the cowling portion 26. By the outer curved wall portion 37, the cowling portion 26 and the left and right support wall portions 39, the second air channel 34a which guides the traveling airflow in the upward direction from the front side of the vehicle is formed, and the cowling portion 26 is formed curvedly that is convex toward the outside of the vehicle.

With the above configuration, since the second air channel 34a which guides the traveling airflow in the upward direction from the front side of the vehicle is separately formed from air duct 31 in the screen 25, the screening effect for the occupant J positioned rear of the windscreen device can be enhanced while suppressing the height of the screen 25.

In addition, since the outer concavely-curved wall portion 37 is covered by the convexly curved cowling portion 26 at the outside of the vehicle, it is possible to prevent the outer concavely-curved wall portion 37 from being exposed as the appearance of the screen 25. Consequently, it can enhance the degree of freedom in design for the appearance of the screen 25 and, thus, the saddle-type motorcycle 1, for example, by forming a convex rounded appearance of a streamlined shape on the outer side of the vehicle.

Further, the screen 25 includes the inner concavely-curved wall portion 36 which is raised in the rearward direction so as to guide the traveling airflow from the front side of the vehicle to the upward side thereof, the cowling portion 26 for covering the inner curved wall portion 36 from the outside of the vehicle, with the gap being interposed between the inner curved wall portion and the cowling portion, and the left and right large sidewall portions 39D assembled to left-right sides of the inner curved wall portion 36 towards the cowling portion 26. By the inner curved wall portion 36, the cowling portion 26 and the left and right large sidewall portions 39D, the large air channel 34D which guides the traveling airflow in the upward direction from the front side of the vehicle is formed, and the cowling portion 26 is formed convexly and curvedly on the outside of the vehicle.

That is, since the large air channel 34D which guides the traveling airflow in the upward direction from the front side of the vehicle is formed in the screen 25, the screening effect for the occupant J positioned rear of the windscreen device can be enhanced while suppressing the height of the screen 25.

In addition, since the inner concavely-curved wall portion 36 is covered by the convexly curved cowling portion 26 at the outside of the vehicle, it is possible to prevent the inner concavely-curved wall portion 36 from being exposed in terms of the appearance of the screen 25. Consequently, it can enhance the degree of freedom in design for the appearance of the screen 25 and, thus, the saddle-type motorcycle 1, for example, by forming a convex rounded appearance of a streamlined shape on the outer side of the vehicle.

Further, since the outer curved wall portion 37 serving as a rectifying plate which is curved along the curved wall 36 is provided in the inside of the air channel 34D, the traveling airflow in the air channel 34D is easily rectified by the rectifying plate. Accordingly, it is possible to enhance the screening effect by easily venting the traveling airflow in an upward direction.

With the screen 25, left-right side portions 26a of the cowling portion 26 are curved in the rearward direction, with both outer sides being further curved in the rearward direction. Accordingly, since the traveling airflow flowing on the surface of the cowling portion 26 flows easily to outer sides in the left-right direction, it is possible to effectively suppress resistance to the traveling airflow.

Further, with the screen 25, the upper portions of the inner curved wall portion 36 and the outer curved wall portion 37 are constituted of the inner flat portion 41 and the outer flat portion 42 which are made of a transparent member, and the cowling portion 26 is provided at an upper portion thereof with the upper cut portion 28 formed by recessing the upper end thereof in a downward direction. Consequently, the field of view over the upper portion of the screen 25 can be easily obtained, thereby enhancing the sense of openness of the riding position.

The invention is not limited to the above-mentioned embodiments. Various divided configurations of the screen 25 may be provided, for example, by integrally forming the cowling portion 26 with the left and right support wall portions 39, integrally forming the air duct 31 with the inner flat portion 41 and the outer flat portion 42, or integrally forming the cowling portion 26 and the air duct 31. Further, a portion or the whole portion of the screen 25 or the air duct 31 may be made of the same opaque resin as the cover body 16a, except for the inner flat portion 41 and the outer flat portion 42. Also, the whole appearance of the screen 25 may be designed so that the air duct 31 covering the cowling portion 26 or a portion of the inner curved wall portion 36 and the outer curved wall portion 37 is exposed from the appearance of the motorcycle 1, or is seen through the cowling portion 26.

Further, the constructions shown in the above-mentioned embodiments are exemplified as one example, and it is needless to say that the present invention is applicable to a two-wheeled vehicle other than the scooter-type vehicle, a three-wheeled vehicle or a four-wheeled vehicle, and various modifications are conceivable without departing from the scope of the present invention defined by the appended claims.

### Industrial Applicability

With the windshield device for the saddle-type vehicle according to the invention, since the air channel which guides the traveling airflow in the upward direction from the front side of the vehicle is formed in the windshield device, a screening effect for a rear occupant can be enhanced while suppressing the height of the windscreen device.

In addition, since the concavely curved wall portion is covered by the convexly curved cowling portion at the outside of the vehicle, it is possible to prevent the concavely curved wall portion from being exposed in terms of the appearance of the windshield device. Consequently, it can enhance the degree of freedom in design for the appearance of the saddle-type vehicle, for example, by forming a convex rounded appearance of a streamlined shape on the outer side of the vehicle.

## Claims

1. A windshield device for a saddle-type vehicle comprising:
a concavely curved air duct (31) which is raised in a rearward direction so as to guide a traveling airflow from a front side of the vehicle to an upward direction;
an inner curved wall portion (36) which forms a wall portion of the air duct (31) on an inside of the vehicle;
a curved wall portion (37) which forms a wall portion of the air duct (31) on an outside of the vehicle and is curved along the air duct (31);
a cowling portion (26) which is formed in a convexly curved shape toward the outer side of the vehicle so as to cover the curved wall portion (37) from the outside of the vehicle, with a gap (34) being interposed between the curved wall portion (37) and the cowling portion (26); and
left-right side wall portions (26a) each provided at left-right sides of the curved wall portion (37) and extends towards the cowling portion (26);
wherein an air channel (34a) is formed by the curved wall portion (37), the cowling portion (26) and left-right side wall portions (26a), the air channel (34a) guiding the traveling airflow from the front direction of the vehicle toward an upward direction, so that the traveling airflow moves further upper than the upper end of the cowling portion
whereby
an upper portion of the inner curved wall portion (36) has an inner flat transparent member (41) formed in a rectangular shape which extends in a left-right direction when seen at a front view, and
an upper portion of the curved wall portion (37) has an outer flat transparent member (42) formed in a rectangular shape which extends in a widthwise direction when seen at a front view, and
the cowling portion (26) has, at an upper portion thereof, an upper cut portion (28) which is formed in a semi-circular shape, when seen from the front side, and forms an arc-shaped upper edge shape which is convex in a downward direction, and
the cowling portion (26) has, at a lower portion at an inner side in the left-right direction thereof, a lower cut portion (27) which is formed in a rectangular shape, when seen from the front side, and forms a U-shaped inner edge shape which is opened in a downward direction.

2. The windshield device of Claim 1, wherein left-right side portions of the cowling portion (26) are curved in a rearward direction, with both outer sides being further curved in the rearward direction.

## Patentansprüche

1. Windschutzscheibenvorrichtung für ein Fahrzeug vom Satteltyp, umfassend:
eine konkav gekrümmte Luftführung (31), die in einer rückwärtigen Richtung derart ansteigt, dass Fahrluftstrom von einer Vorderseite des Fahrzeugs in eine Aufwärtsrichtung geführt wird;
einen inneren gekrümmten Wandbereich (36), der einen Wandbereich der Luftführung (31) an einer Innenseite des Fahrzeugs bildet;
einen gekrümmten Wandbereich (37), der einen Wandbereich der Luftführung (31) an einer Außenseite des Fahrzeugs bildet und entlang der Luftführung (31) gekrümmt ist;
einen Verkleidungsbereich (26), der in einer konvex gekrümmten Gestalt zur Außenseite des Fahrzeugs hin derart gebildet ist, dass er den gekrümmten Wandbereich (37) von der Außenseite des Fahrzeugs bedeckt, wobei ein Spalt (34) zwischen dem gekrümmten Wandbereich (37) und dem Verkleidungsbereich (26) eingefügt ist; und
Links-Rechts-Seitenwandbereiche (26a), die jeweils an Links-Rechts-Seiten des gekrümmten Wandbereichs (37) vorgesehen sind und sich zum Verkleidungsbereich (26) hin erstrecken;
wobei ein Luftkanal (34a) durch den gekrümmten Wandbereich (37), den Verkleidungsbereich (26) und Links-Rechts-Seitenwandbereiche (26a) gebildet ist, wobei der Luftkanal (34a) den Fahrluftstrom von der Vorderrichtung des Fahrzeugs zu einer Aufwärtsrichtung derart führt, dass der Fahrluftstrom sich weiter aufwärts bewegt als das obere Ende des Verkleidungsbereichs,
wobei ein oberer Bereich des inneren gekrümmten Wandbereichs (36) ein inneres flaches transparentes Element (41) hat, das in einer rechteckigen Gestalt gebildet ist und sich bei Betrachtung von vorne in einer Links-Rechts-Richtung erstreckt, und
ein oberer Bereich des gekrümmten Wandbereichs (37) ein äußeres flaches transparentes Element (42) hat, das in einer Rechteckgestalt gebildet ist und sich bei Betrachtung von vorne in einer Breitenrichtung erstreckt, und
der Verkleidungsbereich (26) an seinem oberen Bereich einen oberen Ausschnittbereich (28) hat, der bei Betrachtung von der Vorderseite in einer Halbkreisgestalt gebildet ist und eine bogenförmige obere Randgestalt bildet, die in einer Abwärtsrichtung konvex ist, und
der Verkleidungsbereich (26) an seinem unteren Bereich an einer Innenseite in der Links-Rechts-Richtung einen unteren Ausschnittbereich (27) hat, der bei Betrachtung von der Vorderseite in einer Rechteckgestalt gebildet ist und eine U-förmige innere Randgestalt bildet, die in einer Abwärtsrichtung geöffnet ist.

2. Windschutzscheibenvorrichtung nach Anspruch 1, wobei Links-Rechts-Seitenbereiche des Verkleidungsbereichs (26) in einer Rückwärtsrichtung gekrümmt sind, wobei beide Außenseiten weiter in der Rückwärtsrichtung gekrümmt sind.

## Revendications

1. Dispositif pare-brise pour véhicule du type à selle comprenant :
un conduit d'air incurvé de façon concave (31) qui est relevé dans une direction vers l'arrière de façon à guider un flux d'air mobile depuis un côté avant du véhicule jusqu'à une direction vers le haut ;
une partie de paroi incurvée interne (36) qui forme une partie de paroi du conduit d' air (31) sur un intérieur du véhicule ;
une partie de paroi incurvée (37) qui forme une partie de paroi du conduit d'air (31) sur un extérieur du véhicule et est incurvée le long du conduit d'air (31) ;
une partie de carénage (26) qui a une forme incurvée de façon convexe vers le côté externe du véhicule de façon à recouvrir la partie de paroi incurvée (37) depuis l'extérieur du véhicule, un espace (34) étant interposé entre la partie de paroi incurvée (37) et la partie de carénage (26) ; et
des parties de paroi de côtés gauche-droit (26a) prévues chacune à des côtés gauche-droit de la partie de paroi incurvée (37) et s'étendant vers la partie de carénage (26) ;
dans lequel un canal d' air (34a) est formé par la partie de paroi incurvée (37), la partie de carénage (26) et les parties de paroi de côtés gauche-droit (26a), le canal d' air (34a) guidant le flux d' air mobile de la direction avant du véhicule vers une direction vers le haut, de sorte que le flux d'air mobile se déplace plus en haut que l'extrémité haute de la partie de carénage
dans lequel
une partie haute de la partie de paroi incurvée interne (36) comporte un organe transparent plat interne (41) de forme rectangulaire qui s'étend dans une direction gauche-droite vu de face, et
une partie haute de la partie de paroi incurvée (37) comporte un organe transparent plat externe (42) de forme rectangulaire qui s'étend dans une direction de la largeur vu de face, et
la partie de carénage (26) comporte, à une partie haute, une partie coupée haute (28) de forme semi-circulaire, vue du côté avant, et a la forme d'un bord haut en forme d'arc qui est convexe dans une direction vers le bas, et
la partie de carénage (26) comporte, à une partie basse d'un côté interne dans sa direction gauche-droite, une partie coupée basse (27) de forme rectangulaire, vue du côté avant, et a la forme d'un bord interne en forme d'U qui est ouvert dans une direction vers le bas.

2. Dispositif pare-brise selon la revendication 1, dans lequel des parties de côtés gauche-droit de la partie de carénage (26) sont incurvées dans une direction vers l'arrière, les deux côtés externes étant davantage incurvés dans une direction vers l'arrière.
